(19) Europäisches Patentamt
European Patent Office
Office européen des brevets

(11) **EP 4 471 382 A1**

(12) **EUROPEAN PATENT APPLICATION**

(43) Date of publication:
**04.12.2024 Bulletin 2024/49**

(21) Application number: **24178720.9**

(22) Date of filing: **29.05.2024**

(51) International Patent Classification (IPC):
**G01D 5/244** (2006.01)

(52) Cooperative Patent Classification (CPC):
**G01D 5/24476**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 JP 2023089653**
**29.01.2024 JP 2024010713**

(71) Applicant: **Magnescale Co., Ltd.**
**Isehara, Kanagawa 259-1146 (JP)**

(72) Inventors:
- **MATSUO, Atsushi**
**Isehara, 259-1146 (JP)**
- **OTOMO, Nobuhiro**
**Isehara, 259-1146 (JP)**
- **OKOSHI, Seiya**
**Isehara, 259-1146 (JP)**

- **KATO, Shun**
**Isehara, 259-1146 (JP)**
- **SUZUKI, Akinori**
**Isehara, 259-1146 (JP)**
- **TANABE, Goshi**
**Isehara, 259-1146 (JP)**
- **ISHIMOTO, Shigeru**
**Isehara, 259-1146 (JP)**
- **ENOMOTO, Tsutomu**
**Isehara, 259-1146 (JP)**
- **TANIGUCHI, Kayoko**
**Isehara, 259-1146 (JP)**
- **TAMIYA, Hideaki**
**Isehara, 259-1146 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **DISPLACEMENT CALCULATION DEVICE**

(57)      A displacement calculation device 30 calculates a displacement based on two or more displacement detection signals differing in phase. The displacement calculating device 30 includes a detected displacement calculation unit 32 calculating a detected displacement based on the displacement detection signals, a signal analysis unit 33 calculating an amplitude error, a vibration center error, and a phase error between the displacement detection signals and a reference signal, a periodic displacement error calculation unit 34 calculating a periodic displacement error and a period of the displacement error based on the errors calculated by the signal analysis unit 33, and a displacement correction unit 35 correcting the detected displacement calculated by the detected displacement calculation unit 32, based on the displacement error and its period calculated by the periodic displacement error calculation unit 34, and outputting a corrected calibrated displacement.

*FIG. 4*

**Description**

Technical Field

0001 The present invention relates to a displacement calculation device and a displacement calculation method that calculate a displacement based on a displacement detection signal output from a displacement detection sensor constituting a displacement detection device such as a linear encoder or a rotary encoder.

Background Art

0002 A linear encoder and a rotary encoder are conventionally known as a device for detecting a displacement. In terms of the manner of the displacement detection, for example, an optical encoder and a magnetic encoder are known. In an optical encoder, interference signals that vary in intensity in accordance with displacement of a diffraction grating scale or the like are received by light receiving elements of a displacement detection sensor and subjected to photoelectric conversion. The converted periodically varying sinusoidal electrical signals are output as phase A and phase B from the displacement detection sensor. In a magnetic encoder, a magnetic force that varies in accordance with displacement of a magnetic scale is detected by a magnetic sensor. Periodically varying sinusoidal electrical signals for the detected magnetic force are output as phase A and phase B from a displacement detection sensor including the magnetic sensor.

0003 Typically, the phase B of the electrical signals (displacement detection signals) output from such a displacement detection sensor is shifted in phase by 1/4 period, i.e., 90°, with respect to the phase A. In the displacement detection, whether the relative movement direction between the displacement detection sensor and the scale is positive or negative can be determined based on whether the phase B precedes the phase A or follows the phase A.

0004 The displacement detection signals output from the displacement detection sensor are input into a displacement calculation device. Typically, the input displacement detection signals are subjected to analog-to-digital conversion (A/D conversion) and then subjected to interpolation for each of the phase A and phase B. Thereafter, the displacement detection signals are output as information on the displacement of the scale.

0005 In this displacement calculation device, for example, the converted digital displacement detection signal phase A and displacement detection signal phase B are developed into a Lissajous waveform on a lookup table per a sampling frequency. The lookup table represents the phase A on the X-axis and the phase B on the Y-axis. Based on this Lissajous waveform on the lookup table, the radius and angle of this Lissajous waveform are calculated. One period of the Lissajous waveform corresponds to one period of the displacement detection signal phase A and displacement detection signal phase B output from the displacement detection sensor. Accordingly, a displacement per a unit time can be calculated by calculating the angular change per the sampling frequency.

0006 Depending on the conditions (states) of the displacement detection sensor, scale, etc., the Lissajous waveform created on the lookup table can have a distorted shape instead of a perfect circle shape. When the Lissajous waveform coincides with an ideal Lissajous waveform having a perfect circle shape, there is no periodic detected error. When the Lissajous waveform has a distorted shape, the signals input from the displacement detection sensor include a periodic error.

0007 Such an error is called "interpolation error". An interpolation error is relatively stable and always occurs in each and every period of the displacement detection signals output from the displacement detection sensor. Therefore, drawing the trajectory of the Lissajous waveform for one period of the displacement detection signals allows the interpolation error to be corrected in the next period. Thus, it is relatively easy to correct an interpolation error. A conventionally known method for such correction of an interpolation error is disclosed in Japanese Unexamined Patent Application Publication No. H8-122097. Further, a method of correcting a radially varying waveform of a Lissajous waveform with a correction value averaged over the most recent one period is disclosed in Japanese Unexamined Patent Application Publication No. 2022-93252.

Summary of Invention

0008 However, depending on the states of the displacement detection sensor and scale, the shape of the Lissajous waveform might not be always the same. The shape of the Lissajous waveform may change with a period greater than one period of the displacement detection signals output from the displacement detection sensor. In other words, there may be an error occurring with a period greater than one period of the displacement detection signals. For example, the shape of the Lissajous waveform may periodically change due to pitching, rolling or yawing of the movable stage on which the scale is mounted. Further, the shape of the Lissajous waveform may periodically change also due to distortion of the scale surface or noise generated during the scale recording. In these cases, the shape of the Lissajous waveform changes with a period greater than one period of the displacement detection signals and independent of the period of the displacement detection signals.

0009 Therefore, the above-described conventional correction methods that each correct the Lissajous waveform (or displacement data) in one period of the displacement detection signals output from the displacement detection sensor are not capable of sufficiently correcting an error varying with a period greater than one period of the displacement detection signals. That is to say, in such a case, the difference value between the Lissajous waveform based on the displacement detection signals output from the displacement detection sensor and the ideal Lissajous waveform having a perfect circle shape constantly changes; therefore, the conventional correction methods cannot converge the correction residual.

0010 The present invention has been achieved in view of the above-described circumstances, and an object of the invention is to provide a displacement calculation device which enables correction of an error varying with a period greater than one period of the displacement detection signals and independent of the period of the displacement detection signals.

0011 To solve the above, the present invention provides a displacement calculation device having a scale and a displacement detection sensor detecting a relative displacement with respect to the scale, the displacement detection device including:

a detected displacement calculation unit that calculates a displacement based on two or more displacement detection signals (periodic signals) differing in phase output from the displacement detection sensor;
a signal analysis unit that calculates an amplitude difference, a center position difference, and a phase difference between the displacement detection signals and a reference signal corresponding to the displacement detection signals;
a periodic displacement error calculation unit that calculates, based on the differences calculated by the signal analysis unit, (i) a first displacement difference signal varying with a period equal to or less than a period of the displacement detection signals and (ii) a second displacement difference signal varying with a period greater than the period of the displacement detection signals and independent of at least the period of the displacement detection signals; and
a displacement correction unit that corrects the displacement calculated by the detected displacement calculation unit, based on the first displacement difference signal and second displacement difference signal calculated by the periodic displacement error calculation unit, and outputs a corrected calibrated displacement.

0012 The present invention also provides a displacement calculation method including:

a detected displacement calculation step of calculating a detected displacement based on two or more displacement detection signals (periodic signals) differing in phase output from a displacement detection sensor detecting a relative displacement with respect to a scale;
a signal analysis step of calculating an amplitude difference, a center position difference, and a phase difference between the displacement detection signals and a reference signal corresponding to the displacement detection signals;
a periodic displacement error calculation step of calculating, based on the differences calculated in the signal analysis step, (i) a first displacement difference signal varying with a period equal to or less than a period of the displacement detection signals and (ii) a second displacement difference signal varying with a period greater than the period of the displacement detection signals and independent of at least the period of the displacement detection signals; and
a displacement correction step of correcting the displacement calculated in the detected displacement calculation step, based on the first displacement difference signal and second displacement difference signal calculated in the periodic displacement error calculation step, and outputting a corrected calibrated displacement.

0013 In the displacement calculation device (displacement calculation method) according to this aspect, the detected displacement calculation unit (detected displacement calculation step) calculates a detected displacement based on two or more displacement detection signals (periodic signals) differing in phase. The signal analysis unit (signal analysis step) calculates an amplitude difference (amplitude error), a center position difference (vibration center error) (offset), and a phase difference (phase error) between the displacement detection signals and a reference signal corresponding to the displacement detection signals. These differences (errors) are error components included in the displacement detection signals.

0014 Subsequently, the periodic displacement error calculation unit (periodic displacement error calculation step) calculates a periodically varying displacement difference signal (corresponding to a displacement error and its period) based on the differences (errors) calculated by the signal analysis unit (signal analysis step). The displacement correction unit (displacement correction step) corrects the detected displacement calculated by the detected displacement calculation unit (detected displacement calculation step), based on the calculated displacement difference signal, and outputs a corrected calibrated displacement.

0015 The periodic displacement difference signal (corresponding to a displacement error and its period) calculated by the periodic displacement error calculation unit (periodic displacement error calculation step) includes a first displacement difference signal (corresponding to a first displacement error and its period) and a second displacement difference signal (corresponding to a second displacement error and its period). The first displacement difference signal varies with a period equal to or less than the period (one period) of the displacement detection signals. The second displacement difference signal varies with a period greater than the period of the displacement detection signals and independent of at least the period of the displacement detection signals. Therefore, when a displacement error having a period equal to or less than the period of the displacement detection signals and a displacement error having a period greater than the period of the displacement detection signals and independent of the period of the displacement detection signals occur, the displacement calculated by the detected displacement calculation unit (detected displacement calculation step) is corrected for these errors by the displacement correction unit (displacement correction step).

0016 Thus, the displacement calculation device (displacement calculation method) according to the present invention is capable of correcting both a displacement error having a period equal to or less than the period of the displacement detection signals and a displacement error having a period greater than the period of the displacement detection signals and independent of the period of the displacement detection signals. Consequently, the detected displacement calculated based on the displacement detection signals are precisely (accurately) corrected and the correction residual is converged.

0017 As described above, the displacement error includes an error caused by pitching, rolling, or yawing of the movable stage on which the scale is mounted, an error caused by distortion of the scale surface, and an error caused by noise generated during the scale recording. These errors have a period greater than the period of the displacement detection signals and occur with a period independent of the period of the displacement detection signals. In accordance with the present invention, such a displacement error is precisely (accurately) corrected and the correction residual is converged.

0018 The period greater than the period of the displacement detection signals and independent of at least the period of the displacement detection signals includes a period defined as follows:
a period greater than the period (one period) of the displacement detection signals but not equal to an integer multiple of the period of the displacement detection signals.

0019 The period greater than the period of the displacement detection signals and independent of the period of the displacement detection signals is preferably "a period greater than the period of the displacement detection signals but less than 100 times the period of the displacement detection signals" or "a period greater than the period of the displacement detection signals but less than 1/10 of the effective scale length". The effective scale length means a length which allows the displacement detection sensor to obtain the displacement detection signals (periodic signals) from the scale. The effective scale length in the case of a linearly provided scale refers to the length of the scale. The effective scale length in the case of a cylindrically provided scale refers to the circumference of the scale. In the present invention, an error varying with a periodicity and the period of the error are to be detected. Therefore, on an empirical basis, it is preferred that the effective scale length includes at least 10 or more periods of the displacement detection signals, so that an error having a period less than 100 times the period of the displacement detection signals is detected.

0020 The periodic displacement error calculation unit (periodic displacement error calculation step) may include:
an intra-period error calculation unit (intra-period error calculation process) that calculates a first displacement difference signal (corresponding to a first displacement error and its period) varying with a period equal to or less than the period of the displacement detection signal; and an extra-period error calculation unit (extra-period error calculation process) that calculates a second displacement difference signal (corresponding to a second displacement error and its period) varying with a period greater than the period of the displacement detection signals and independent of at least the period of the displacement detection signals, and
the displacement correction unit (displacement correction step) may be configured to correct the detected displacement calculated by the detected displacement calculation unit (detected displacement calculation step), based on the first displacement difference signal and second displacement difference signal calculated by the intra-period error calculation unit (intra-period error calculation process) and extra-period error calculation unit (extra-period error calculation process) of the periodic displacement error calculation unit (periodic displacement error calculation step).

0021 The displacement calculation device may further include a storage that stores data on the displacement difference signals (corresponding to displacement errors and their periods) calculated by the periodic displacement error calculation unit, and the periodic displacement error calculation unit may be configured to store data on the calculated displacement errors and periods into the storage.

0022 The present invention further provides a displacement calculation device calculating a displacement based on a displacement detection signal (periodic signal) that is output from a displacement detection sensor detecting a relative displacement with respect to a scale and that varies periodically in accordance with the relative displacement, the displacement calculation device including:

4

a signal analysis unit that calculates an amplitude difference (amplitude error), a center position difference (vibration center error), and a phase difference (phase error) between two or more displacement detection signals differing in phase and a reference signal corresponding to the displacement detection signals;

a periodic displacement error calculation unit that calculates, based on the differences (errors) calculated by the signal analysis unit, a first displacement difference signal (corresponding to a first displacement error and its period) varying with a period equal to or less than a period (one period) of the displacement detection signals and a second displacement difference signal (corresponding to a second displacement error and its period) varying with a period greater than the period of the displacement detection signals and independent of at least the period of the displacement detection signals;

a signal correction unit that corrects the displacement detection signals based on the first displacement difference signal varying with a period equal to or less than the period of the displacement detection signals and second displacement difference signal varying with a period greater than the period of the displacement detection signals and independent of at least the period of the displacement detection signals calculated by the periodic displacement error calculation unit; and

a calibrated displacement calculation unit that calculates a calibrated displacement based on the displacement detection signals corrected by the signal correction unit and outputs the calculated calibrated displacement.

0023 The present invention also provides a method of calculating a displacement based on a displacement detection signal (periodic signal) that is output from a displacement detection sensor detecting a relative displacement with respect to a scale and that varies periodically in accordance with the relative displacement, the method including:

a signal analysis step of calculating an amplitude difference (amplitude error), a center position difference (vibration center error), and a phase difference (phase error) between two or more displacement detection signals differing in phase and a reference signal corresponding to the displacement detection signals;

a periodic displacement error calculation step of calculating, based on the differences (errors) calculated in the signal analysis step, a first displacement difference signal (corresponding to a first displacement error and its period) varying with a period equal to or less than a period (one period) of the displacement detection signals and a second displacement difference signal (corresponding to a second displacement error and its period) varying with a period greater than the period of the displacement detection signals and independent of at least the period of the displacement detection signals;

a signal correction step of correcting the periodic signals based on the first displacement difference signal varying with a period equal to or less than the period of the displacement detection signals and second displacement difference signal varying with a period greater than the period of the displacement detection signals and independent of at least the period of the displacement detection signals calculated in the periodic displacement error calculation step; and

a calibrated displacement calculation step of calculating a calibrated displacement based on the displacement detection signals corrected in the signal correction step and outputting the calculated calibrated displacement.

0024 In the displacement calculation device (displacement calculation method) according to this aspect, the signal analysis unit (signal analysis step) calculates an amplitude error, a vibration center error (offset), and a phase error between the displacement detection signals and a reference signal corresponding to the displacement detection signals. The periodic displacement error calculation unit (periodic displacement error calculation step) calculates a periodic displacement difference signal (corresponding to a displacement error and its period) based on the errors calculated by the signal analysis unit (signal analysis step). The signal correction unit (signal correction step) corrects the displacement detection signals based on the calculated displacement difference signal. The calibrated displacement calculation unit (calibrated displacement calculation step) calculates a calibrated displacement based on the displacement detection signals corrected by the signal correction unit (signal correction step) and outputs the calculated calibrated displacement.

0025 The periodic displacement error calculated by the periodic displacement error calculation unit (periodic displacement error calculation step) includes a displacement error varying with a period equal to or less than the period (one period) of the displacement detection signals and a displacement error varying with a period greater than the period of the displacement detection signals and independent of at least the period of the displacement detection signals. Therefore, when a displacement error having a period equal to or less than the period of the displacement detection signals and a displacement error having a period greater than the period of the displacement detection signals and independent of the period of the displacement detection signals occur, the displacement detection signals are corrected for these errors by the signal correction unit (signal correction step). Based on the thus-corrected displacement detection signals, a calibrated displacement is calculated.

0026 Thus, the displacement calculation device (displacement calculation method) according to this aspect is capable of correcting the displacement detection signals for both a displacement error having a period equal to or less than one period of the displacement detection signals and a displacement error having a period greater than one period of the displacement detection signals and independent of the period of the periodic signals. Consequently, the detected displacement calculated based on the periodic signals are precisely (accurately) corrected and the correction residual is converged.

0027 In each of the displacement calculation devices (displacement calculation methods) according to the above-described aspects, the periodic displacement error calculation unit (periodic displacement error calculation step) may include: an intra-period error calculation unit (intra-period error calculation process) that calculates a first displacement difference signal (corresponding to a first displacement error and its period) varying with a period equal to or less than the period of the displacement detection signals; and an extra-period error calculation unit (extra-period error calculation process) that calculates a second displacement difference signal (corresponding to a second displacement error and its period) occurring with a period greater than the period of the displacement detection signals and independent of at least the period of the displacement detection signals; and

the signal correction unit (signal correction step) may be configured to correct the displacement detection signals based on the first displacement difference signal and second displacement difference signal calculated by the intra-period error calculation unit (intra-period error calculation process) and extra-period error calculation unit (extra-period error calculation process) of the periodic displacement error calculation unit (periodic displacement error calculation step).

0028 The displacement calculation device may further include a storage that stores data on the displacement difference signals (corresponding to displacement errors and their periods) calculated by the periodic displacement error calculation unit, and the periodic displacement error calculation unit may be configured to store data on the calculated displacement difference signals (displacement errors and periods) into the storage.

0029 The present invention further provides a displacement calculation device for calculating a displacement based on signals corresponding to two or more phases including at least a first phase and a second phase different from the first phase, the displacement calculation device including:

a displacement calculation unit that calculates a first displacement based on the signals respectively corresponding to the first phase and the second phase;
a signal analysis unit that detects a period related to a trajectory of a center of a Lissajous waveform obtained from the signals respectively corresponding to the first phase and the second phase and analyzes the signals for the detected period;
a displacement error calculation unit that calculates, based on analysis by the signal analysis unit, a displacement error corresponding to a periodicity relevant to the trajectory of the center of the Lissajous waveform in the signals for the detected period; and
a displacement correction unit that corrects the displacement calculated by the displacement calculation unit, based on the displacement error calculated by the displacement error calculation unit, and outputs the corrected displacement (a corrected calibrated displacement).

0030 Also in this displacement calculation device, the displacement error calculation unit calculates, based on analysis of the signals for one or more periods by the signal analysis unit, both a displacement error having a period equal to or less than one period of the signals and a displacement error having a period greater than one period of the signals and independent of the period of the periodic signals, and the displacement correction unit corrects the displacement calculated by the displacement calculation unit, based on the errors calculated by the displacement error calculation unit. Therefore, also in this displacement calculation device, the detected displacement calculated based on the signals is precisely (accurately) corrected and the correction residual is converged.

Advantageous Effects of Invention

0031 The displacement calculation device and displacement calculation method according to the present invention are capable of correcting both a displacement error varying with a period equal to or less than one period of the displacement detection signals and a displacement error varying with a period greater than one period of the displacement detection signals and independent of the period of the displacement detection signals. Consequently, the displacement calculated based on the displacement detection signals is precisely (accurately) corrected and the correction residual is converged.

Brief Description of Drawings

0032

FIG. 1 is an illustrative diagram schematically illustrating a structure of a displacement detection device according to a first embodiment of the present invention;

FIG. 2 is an illustrative diagram schematically illustrating a structure of a light receiving unit according to the first embodiment;

FIG. 3 is an illustrative diagram schematically illustrating a configuration of the light receiving unit and a differential amplifier according to the first embodiment;

FIG. 4 is a block diagram schematically illustrating a configuration of a displacement calculation device according to the first embodiment;

FIG. 5 is an illustrative diagram illustrating a displacement detection signal phase A and a displacement detection signal phase B output from a displacement detection head;

FIG. 6 is an illustrative diagram illustrating a relationship between the displacement detection signals and a Lissajous waveform;

FIG. 7 is an illustrative diagram illustrating a relationship between a Lissajous waveform including an error and an ideal Lissajous waveform including no error;

FIG. 8 is an illustrative diagram illustrating an example of the displacement detection signals output from the detection head;

FIG. 9 is an illustrative diagram for explaining processing in a signal analysis unit and a periodic error calculation unit according to the first embodiment;

FIG. 10 is a block diagram schematically illustrating a configuration of a displacement calculation device according to a second embodiment of the present invention;

FIG. 11 is a block diagram schematically illustrating a configuration of a displacement calculation device according to a third embodiment of the present invention;

FIG. 12 is a block diagram schematically illustrating a configuration of a displacement calculation device according to a fourth embodiment of the present invention;

FIG. 13 is an illustrative diagram for explaining processing in a signal analysis unit and a periodic error calculation unit according to the fourth embodiment;

FIG. 14 is a block diagram schematically illustrating a configuration of a displacement calculation device according to a fifth embodiment of the present invention; and

FIG. 15 is a block diagram schematically illustrating a configuration of a displacement calculation device according to a sixth embodiment of the present invention.

Description of Embodiments

0033 Hereinafter, specific embodiments of the present invention will be described with reference to the drawings.

0034

1. First Embodiment

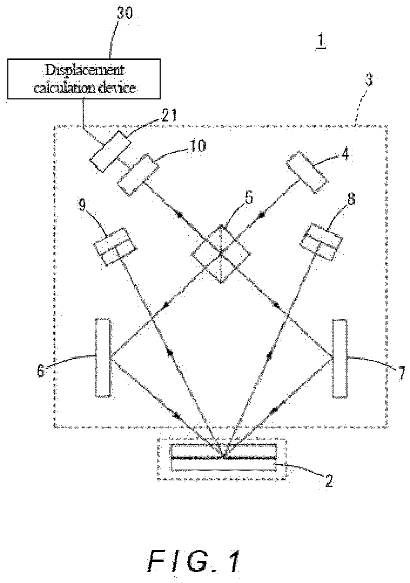

Firstly, a first embodiment of the present invention is described. As shown in FIG. 1, a displacement detection device 1 according to the first embodiment includes at least a scale 2, a detection head (displacement detection sensor) 3, and a displacement calculation device 30. Examples of the displacement detection device 1 include encoders such as a linear encoder and a rotary encoder. By way of example, an optical encoder is employed. However, the present invention is not limited thereto and a magnetic encoder may be employed. In this example, the scale 2 and the detection head (displacement detection sensor) are provided separately from the displacement calculation device 30. However, the scale 2 and the detection head 3 may be included in the displacement calculation device 30.

0035 The scale 2 is a linear scale having a large number of diffraction gratings formed thereon. The scale 2 is fixed to, for example, an immovable structure. The detection head 3 is arranged on a movable body, such as a movable stage, such that it faces the scale 2. The detection head 3 detects a relative displacement with respect to the scale 2.

0036 Specifically, as shown in FIG. 1, the detection head 3 in this embodiment is constituted by a light source 4, a polarizing beam splitter 5, two mirrors 6 and 7, two mirrors 8 and 9, a light receiving unit 10, and a differential amplifier 21. The light source 4 emits a laser beam that is a coherent light. In FIG. 1, the light source 4 emits a laser beam obliquely downward at 45°. The polarizing beam splitter 5 is located on the optical path of the laser beam emitted from the light source 4 to split the laser beam into two laser beams. One laser beam (first laser beam) is transmitted straight, while the other laser beam (second laser beam) follows an optical path reflected by 90°.

0037 On the optical path of the first laser beam, the mirror 6 is arranged so as to reflect the first laser beam by 90°. On the optical path of the second laser beam, the mirror 7 is similarly arranged so as to reflect the second laser beam by 90°. The first laser beam reflected by the mirror 6 and the second laser beam reflected by the mirror 7 are incident on the scale 2. The first laser beam is diffracted by the scale 2 and then reflected by the mirror 8, which is located on the optical path of the diffracted first laser beam, to return along the same optical path. The second laser beam is similarly diffracted by the scale 2 and then reflected by the mirror 9, which is located on the optical path of the diffracted second laser beam, to return along the same optical path. The first laser beam enters the polarizing beam splitter 5 via the mirror 6, while the second laser beam enters the polarizing beam splitter 5 via the mirror 7. These first and second laser beams are re-superimposed one on another by the polarizing beam splitter 5 and then enter the light receiving unit 10.

0038 Note that the intensity of a reflected light reflected by the scale 2, i.e., the intensity of a diffracted light, varies in accordance with the positional relationship between the diffraction gratings provided on the scale 2 and the incident laser beam. For example, the intensity of the diffracted light is highest when the position of radiation of the incident light coincides with a diffraction grating. The intensity of the diffracted light gradually decreases as the position of radiation of the incident light moves in a direction away from the diffraction grating; consequently, the intensity of the diffracted light is lowest when the position of radiation of the incident light is completely deviated from the diffraction grating. When the position of radiation of the incident light moves again in a direction approaching the diffraction grating, the intensity of the diffracted light gradually increases. Accordingly, relative movement of the detection head 3 along the scale 2 relatively moves the position of radiation of the incident light and the position of the diffraction grating, so that the intensity of the diffracted light received by the detection head 3 varies in a sinusoidal form, that is to say, varies periodically.

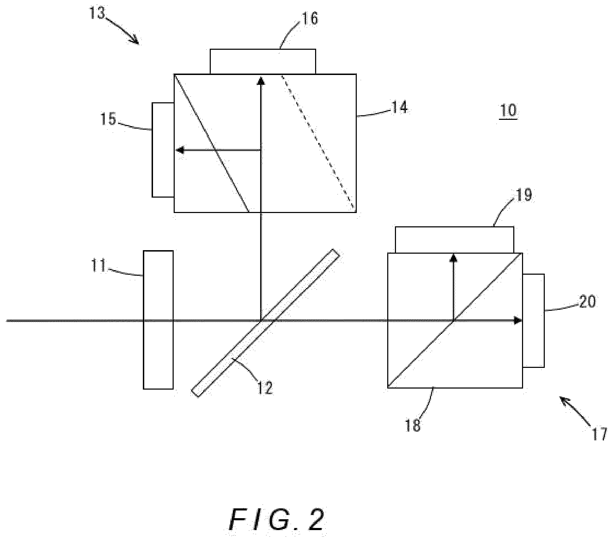

0039 As shown in FIG. 2, the light receiving unit 10 is constituted by a phase plate 11, a half mirror 12, a first light receiving unit 13, a second light receiving unit 17, and other elements. The first light receiving unit 13 is constituted by a polarizing beam splitter 14, a first light receiving element 15, a second light receiving element 16, and other elements. The second light receiving unit 17 is constituted by a polarizing beam splitter 18, a third light receiving element 19, a fourth light receiving element 20, and other elements.

0040 The phase plate 11, the half mirror 12, and the second light receiving unit 17 are arranged in sequence on the straight optical path of the laser beam entering the light receiving unit 10. The entering laser beam passes through the phase plate 11 and then is split into two laser beams, namely, a laser beam reflected by 90° (reflected laser beam) and a laser beam transmitted straight (transmitted laser beam), by the half mirror 12. The reflected laser beam enters the first light receiving unit 13 located on the optical path thereof. The transmitted laser beam enters the second light receiving unit 17.

0041 The reflected laser beam entering the first light receiving unit 13 is further split into two optical paths by the polarizing beam splitter 14. One laser beam is reflected by 90° and is received as an interference signal by the first light receiving element 15, while the other laser beam is transmitted straight and is received as an interference signal by the second light receiving element 16. The transmitted laser beam entering the second light receiving unit 17 is similarly split into two optical paths by the polarizing beam splitter 18. One laser beam is reflected by 90° and is received as an interference signal by the third light receiving element 19, while the other laser beam is transmitted straight and is received as an interference signal by the fourth light receiving element 20. The first light receiving element 15, the second light receiving element 16, the third light receiving element 19, and the fourth light receiving element 20 each photoelectrically convert the received interference signal in accordance therewith and output the converted electrical signal (voltage signal). The electrical signals output from the first light receiving element 15, the second light receiving element 16, the third light receiving element 19, and the fourth light receiving element 20 are output to the differential amplifier 21. As described above, the intensity of the reflected laser beam entering the first light receiving unit 13 (the intensity of the interference signals in the first light receiving unit 13) and the intensity of the transmitted laser beam entering the second light receiving unit 17 (the intensity of the interference signals in the second light receiving unit 17) each vary in a sinusoidal form (periodically) in accordance with relative movement of the scale 2 and detection head 3.

0042 The third light receiving element 19 and the fourth light receiving element 20 are mounted with their axis of polarization rotated 45° with respect to the first light receiving element 15 and the second light receiving element 16. Therefore, the interference signals entering the first light receiving element 15 and the second light receiving element 16 are shifted 90° in phase with respect to the interference signals entering the third light receiving element 19 and the fourth light receiving element 20. Consequently, displacement detection signals output from the first light receiving element 15 and the second light receiving element 16 are shifted 90° in phase with respect to displacement detection signals output from the third light receiving element 19 and the fourth light receiving element 20.

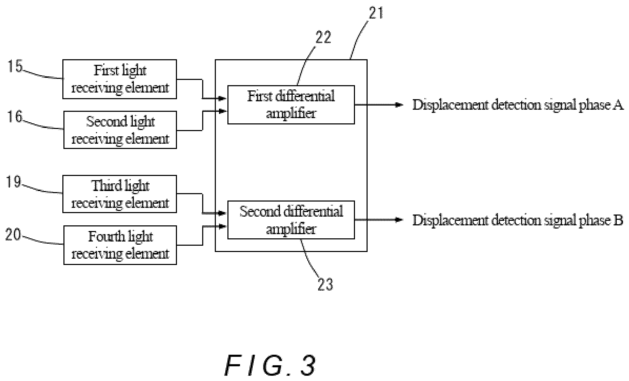

0043 As shown in FIG. 3, the differential amplifier 21 consists of a first differential amplifier 22 and a second differential amplifier 23. The first differential amplifier 22 outputs a displacement detection signal as phase A (first phase) (displacement detection signal phase A), which is an amplified electrical signal (voltage signal), based on the electrical signals output from the first light receiving element 15 and the second light receiving element 16. The second differential amplifier 23 outputs a displacement detection signal as phase B (second phase) (displacement detection signal phase B), which is an amplified electrical signal, based on the electrical signals (voltage signals) output from the third light receiving element 19 and the fourth light receiving element 20.

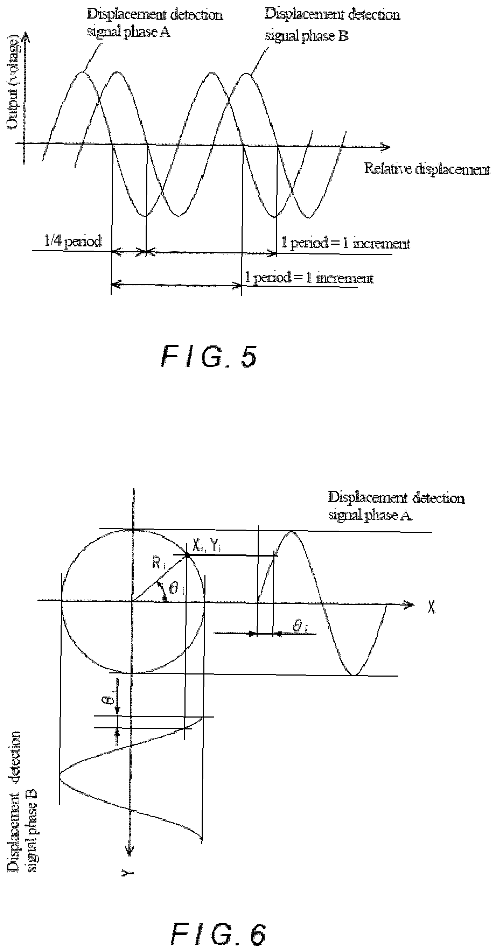

0044 The displacement detection signal phase A and the displacement detection signal phase B are each a signal (periodic signal) indicating a sinusoidal wave varying periodically in accordance with the intensity of the interference signals, i.e., in accordance with relative displacement between the scale 2 and the detection head 3. As can be understood from the foregoing description, the displacement detection signal phase B is shifted 90°, in other words, 1/4 period, in phase with respect to the displacement detection signal phase A. Generally, the displacement detection signal phase A is treated as a sin signal and the displacement detection signal phase B is treated as a cos signal (see FIG. 5). Based on the displacement detection signal phase A and displacement detection signal phase B that differ 90° in phase, whether the displacement detection signal phase B precedes the displacement detection signal phase A or follows the displacement detection signal phase A is determined. On the basis of this determination, whether the direction of the relative displacement between the scale 2 and detection head 3 is positive or negative is determined. Note that the period (one period) of the displacement detection signal phase A and displacement detection signal phase B corresponds to one increment on the scale 2. In the optical encoder in this example, the period (one period) of the displacement detection signal phase A and displacement detection signal phase B is several hundred nm; therefore, one increment on the scale 2 is several hundred nm.

0045 The displacement detection signal phase A and displacement detection signal phase B output from the detection head 3 are input into the displacement calculation device 30. The displacement calculation device 30 calculates a relative displacement (first displacement) between the scale 2 and the detection head 3.

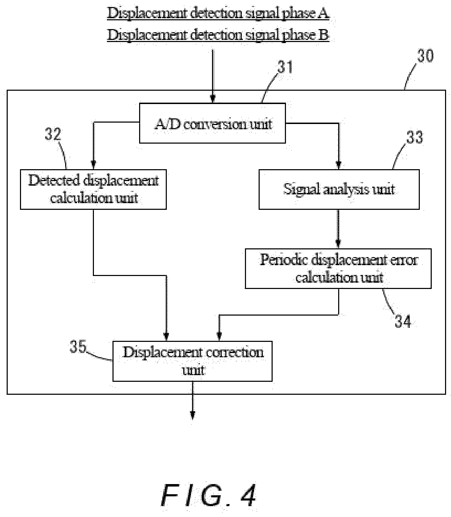

0046 As shown in FIG. 4, the displacement calculation device 30 has processing units such as an A/D conversion unit 31, a detected displacement calculation unit 32, a signal analysis unit 33, a periodic displacement error calculation unit 34, and a displacement correction unit 35. Note that the processing units are synchronized with a high sampling frequency.

0047 The A/D conversion unit 31 converts the displacement detection signal phase A and displacement detection signal phase B as analog signals input from the detection head 3 into digital signals and interpolates them. Thereafter, the A/D conversion unit 31 transmits the displacement detection signal phase A and the displacement detection signal phase B as digital signals to the detected displacement calculation unit 32 and the signal analysis unit 33.

0048 The detected displacement calculation unit 32 develops the displacement detection signal phase A and the displacement detection signal phase B into a Lissajous waveform on a lookup table as shown in FIG. 6, which represents the displacement detection signal phase A on the X axis and the displacement detection signal phase B on the Y axis per the sampling frequency. Based on this Lissajous waveform on the lookup table, the detected displacement calculation unit 32 calculates a radius R and an angle $\theta$ of the Lissajous waveform. The circumference of this Lissajous waveform corresponds to one period of the displacement detection signal phase A and displacement detection signal phase B. Accordingly, calculating an angular change $\Delta\theta$ [° or rad] per the sampling frequency (unit time) enables a displacement [pm or nm] per the unit time, that is to say, a relative displacement between the scale 2 and the detection head 3 for one increment on the scale 2, to be calculated.

0049 For example, in FIG. 6, where the number of sampling is n (natural number) and i = 1 to n,

$$\theta_i = \tan^{-1}(X_i/Y_i);$$

and

$$R_i = (X_i^2 + Y_i^2)^{1/2}.$$

Accordingly, the length L of one increment on the scale 2 is

$$L = 2\pi \times R,$$

where R is a mean radius for the circumference of the Lissajous waveform. $\Delta\theta_i$ [° or rad] in the sampling interval is

$$\Delta\theta_i = \theta_i - \theta_{i-1} = \tan^{-1}(X^i/Y^i) - \tan^{-1}(X_{i-1}/Y_{i-1}).$$

Accordingly, the displacement $\Delta d_i$ [pm or nm] in the sampling interval is

$$\text{Displacement } \Delta d_i = (\Delta\theta_i/2\pi) \times R_i.$$

0050 The detected displacement calculation unit 32 calculates a relative displacement between the scale 2 and the detection head 3 based on the displacement detection signal phase A and the displacement detection signal phase B in this manner, for example.

0051 The signal analysis unit 33 is a processing unit that calculates an amplitude error (amplitude difference), a vibration center error (center position difference), and a phase error (phase difference) between the displacement detection signal phase A and displacement detection signal phase B input from the A/D conversion unit 31 and an ideal reference signal including no error. Specifically, based on the difference between an ideal Lissajous waveform that has a perfect circle shape and is drawn by developing the reference signal on the lookup table and an actual Lissajous waveform that is drawn by developing the displacement detection signal phase A and the displacement detection signal phase B on the lookup table, the signal analysis unit 33 calculates an amplitude error of the actual Lissajous waveform with respect to the ideal Lissajous waveform, an offset as a difference between the center of the ideal Lissajous waveform and the center of the actual Lissajous waveform (corresponding to a difference between the vibration center of the reference signal and the vibration center of the displacement detection signals), and a phase difference for the phase A and phase B as residuals. These errors are error components included in the displacement detection signal phase A and the displacement detection signal phase B and include several error components varying at a certain period.

0052 These three pieces of displacement residual data are stored as distance data (i.e., a displacement, corresponding also to $\Delta\theta$). The period of time for obtaining the displacement is preferably sufficiently greater than at least the signal period of the displacement detection signal phase A and displacement detection signal phase B. For example, it can be set to 100 times the signal period of the displacement detection signal phase A and displacement detection signal phase B. On the other hand, the interval for obtaining one data set is preferably sufficiently smaller than the signal period of the displacement detection signal phase A phase and displacement detection signal phase B. For example, it is preferably set to 1/100 of the signal period of the displacement detection signal phase A and displacement detection signal phase B. Accordingly, for example, $100\times100\times3$ (= 30000) pieces of residual data are obtained. The obtained residual data is transmitted to the periodic displacement error calculation unit 34.

0053 The periodic displacement error calculation unit 34 extracts only periodic residual data, in other words, periodically varying residual data, from the residual data obtained by the signal analysis unit 33, for example, by frequency analysis and converts the extracted periodic residual data into angle data. Thereby, the periodic displacement error calculation unit 34 calculates an error (displacement error) with respect to the angle data indicating the displacement and calculates the variation period of the error. This periodic displacement error is an error generated in accordance with the relative displacement between the scale 2 and the detection head 3 and includes a displacement error varying with a period equal to or less than one period of the displacement detection signal phase A and displacement detection signal phase B and a displacement error varying with a period greater than one period of the displacement detection signal phase A and displacement detection signal phase B (including a period independent of the period of the displacement detection signal phase A and displacement detection signal phase B). Displacement errors varying with such periods and the variation periods of the errors (corresponding to the displacement difference signals) are calculated and transmitted to the displacement correction unit 35.

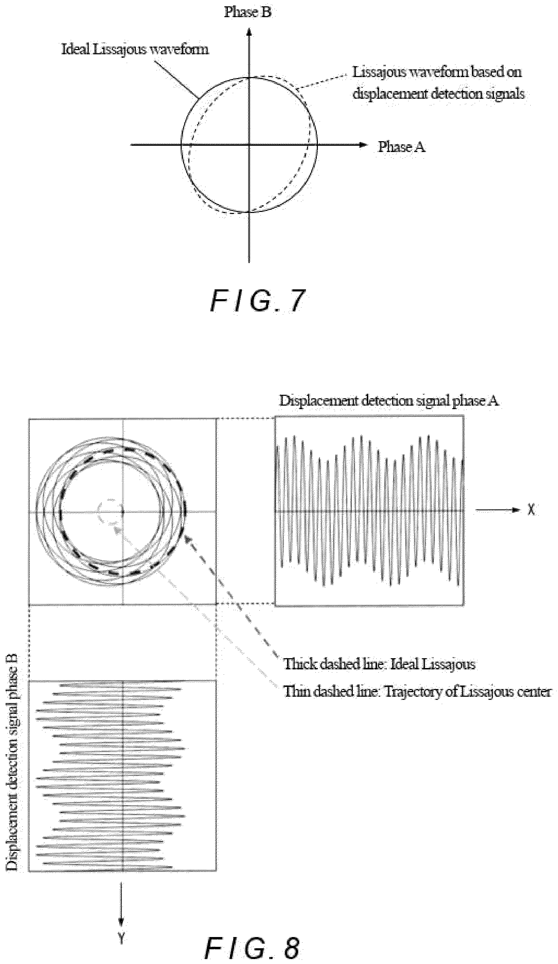

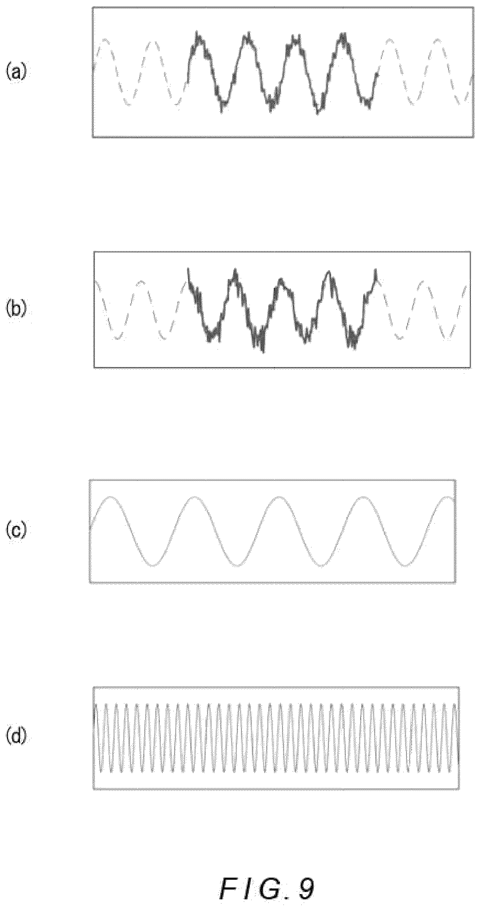

0054 For example, when displacement detection signal phase A and displacement detection signal phase B as shown in FIG. 8 are input into the signal analysis unit 33, the signal analysis unit 33 calculates, for example, residual data as shown in FIGS. 9(a) and 9(b). FIG. 9(a) shows residual data calculated in terms of the offset. FIG.9(b) shows residual data calculated in terms of the amplitude. In each graph, the horizontal axis represents the relative displacement between the scale 2 and the detection head 3. Although not particularly illustrated, the signal analysis unit 33 also calculates residual data in terms of the phase.

0055 As described above, the residual data calculated by the signal analysis unit 33 is processed by the periodic displacement error calculation unit 34, whereby only periodic residual data is extracted. The extracted periodic residual data is converted into angle data, whereby a displacement error (displacement difference signal) is calculated. Examples of the thus-calculated displacement error are shown in FIGS. 9(c) and 9(d). FIG. 9(c) shows a calculated displacement error that varies with a period greater than one period of the displacement detection signal phase A and displacement detection signal phase B (including a period independent of the period of the displacement detection signal phase A and displacement detection signal phase B). FIG. 9(d) shows a calculated displacement error that varies with a period greater than one period of the displacement detection signal phase A and displacement detection signal phase B but different from that in FIG. 9(c) (including a period independent of the period of the displacement detection signal phase A and displacement detection signal phase B). In each graph, the horizontal axis represents the relative displacement between the scale 2 and the detection head 3.

0056 For example, each displacement error can be calculated using the relational equation described below. That is to say, the ideal reference signal can be expressed as $R \cdot \sin(md+\theta)$ and $R \cdot \cos(md+\theta)$, where d is a distance, $\theta$ is a phase, R is an amplitude, and m is a wavenumber.

Here, the wavenumber m can be expressed as $m = 2\pi/L$ using a period L that corresponds to one increment on the scale 2. It is assumed that noise as a noise signal causing a periodically varying displacement error is added to the ideal reference signal. The noise is expressed as r · sin (kd + φ) and r · cos (kd + φ), where φ is a phase, r is an amplitude, and k is a wavenumber.

Note that the amplitude of the displacement error is sufficiently smaller than that of the reference signal (r << R) and the wavenumber of the displacement error is smaller than that of the reference signal (0 < k < m).

In this case, a displacement correction amount for correcting the displacement error component caused by the noise is approximately given by the following equation:

$$\text{Correction Amount} = (1/m) \cdot (r/R) \cdot \sin \{(m - k)d + (\theta - \varphi)\}.$$

In practice, the correction amount can be calculated using only data corresponding to the differences r/R, (m-k), and (θ-φ).

0057 The displacement correction unit 35 sequentially receives the displacement per the unit time, that is to say, the relative displacement between the scale 2 and the detection head 3, calculated by the detected displacement calculation unit 32 and receives the displacement error and its variation period (corresponding to the displacement difference signal) calculated by the periodic displacement error calculation unit 34. The displacement correction unit 35 corrects the relative displacement between the scale 2 and the detection head 3 calculated by the detected displacement calculation unit 32, based on the displacement error and its variation period calculated by the periodic displacement error calculation unit 34, to cancel the displacement error, and outputs the corrected displacement.

0058 As described above, in the linear encoder device 1 according to this embodiment, the periodic displacement error calculation unit 34 calculates a displacement error occurring with a period equal to or less than one period of the displacement detection signal phase A and displacement detection signal phase B and a displacement error occurring with a period greater than one period of the displacement detection signal phase A and displacement detection signal phase B (including a period independent of the period of the displacement detection signal phase A and displacement detection signal phase B), and transmits the calculated displacement errors to the displacement correction unit 35. The displacement correction unit 35 corrects the relative displacement between the scale 2 and the detection head 3 calculated by the detected displacement calculation unit 32, based on the displacement errors calculated by the periodic displacement error calculation unit 34, to cancel the displacement errors.

0059 Thus, the linear encoder device 1 according to this embodiment is capable of correcting both a displacement error having a period equal to or less than one period of the displacement detection signal phase A and displacement detection signal phase B and a displacement error having a period greater than one period of the displacement detection signal phase A and displacement detection signal phase B (including a period independent of the period of the displacement detection signal phase A and displacement detection signal phase B). Consequently, the detected displacement calculated based on the displacement detection signal phase A and the displacement detection signal phase B is precisely (accurately) corrected and the correction residual is converged.

0060 As described above, the displacement error includes an error caused by pitching, rolling, or yawing of the movable stage on which the scale is mounted, an error caused by distortion of the scale surface, and an error caused by noise generated during the scale recording. These errors vary with a period greater than the period (one period) of the displacement detection signal phase A and displacement detection signal phase B and vary with a period independent of the period of the displacement detection signal phase A and displacement detection signal phase B. In accordance with the present invention, such a displacement error is precisely (accurately) corrected and the correction residual is converged.

0061 The period greater than the period of the displacement detection signal phase A and displacement detection signal phase B and independent of the period of the displacement detection signal phase A and displacement detection signal phase B includes a period defined as follows:

a period greater than the period of the displacement detection signal phase A and displacement detection signal phase B but not equal to an integer multiple of the period of the displacement detection signal phase A and displacement detection signal phase B.

0062 The period greater than the period of the displacement detection signal phase A and displacement detection signal phase B and independent of on the period of the displacement detection signal phase A and displacement detection signal phase B is preferably "a period greater than the period of the displacement detection signal phase A and displacement detection signal phase B but less than 100 times the period of the displacement detection signal phase A and displacement detection signal phase B" or "a period greater than the period of the displacement detection signal phase A and displacement detection signal phase B but less than 1/10 of the effective length of the scale 2". The effective length of the scale 2 means a length which allows the detection head 3 to obtain the displacement detection signal phase A and the displacement detection signal phase B from the scale 2. The effective length of the scale 2 in this embodiment that is linearly provided refers to the length of the scale 2. The effective length of a scale cylindrically provided in another aspect refers to the circumference of the scale. In the present invention, an error varying with a periodicity and the period of the error are to be detected. Therefore, on an empirical basis, it is preferred that the effective length includes at least approximately 10 or more periods of the displacement detection signal phase A and displacement detection signal phase B, so that an error having a period less than 100 times the signal period of the displacement detection signal phase A and displacement detection signal phase B is detected.

0063

2. Second Embodiment

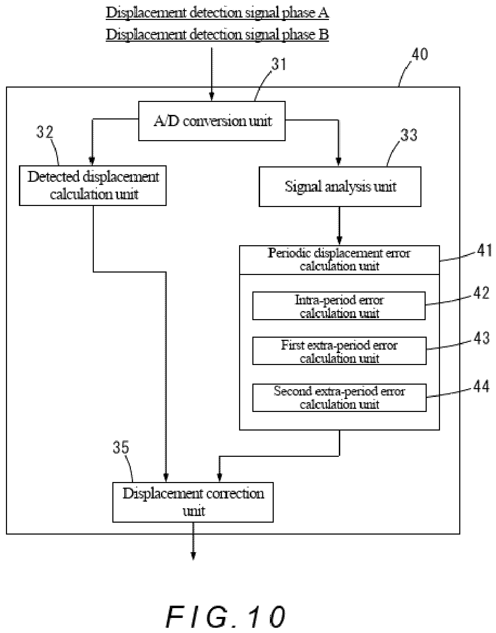

Next, a displacement calculation device according to a second embodiment of the present invention is described with reference to FIG. 10. As shown in FIG. 10, the displacement calculation device 40 according to this embodiment corresponds to the displacement calculation device 30 according to the first embodiment. A periodic displacement error calculation unit 41 of the displacement calculation device 40 is configured differently from the periodic displacement error calculation unit 34 of the displacement calculation device 30. Accordingly, in FIG. 10, the components identical to those of the displacement calculation device 30 are denoted by the same reference numerals used for the displacement calculation device 30.

0064 The periodic displacement error calculation unit 41 includes an intra-period error calculation unit 42, a first extra-period error calculation unit 43, and a second extra-period error calculation unit 44. The intra-period error calculation unit 42 receives the residuals in terms of the amplitude error, offset, and phase difference per the period of the displacement detection signal phase A and displacement detection signal phase B analyzed by the signal analysis unit 33 from the signal analysis unit 33. The intra-period error calculation unit 42 calculates a displacement error per the period of the displacement detection signal phase A and displacement detection signal phase B by converting the received residual data into angle data and also calculates the variation period of the displacement error, and transmits the calculated displacement error per the period of the displacement detection signal phase A and displacement detection signal phase B and the calculated variation period of the displacement error (corresponding to the displacement difference signal) to the displacement correction unit 35.

0065 The first extra-period error calculation unit 43 extracts, from residual data per a preset first period greater than one period of the displacement detection signal phase A and displacement detection signal phase B (for example, the first period is greater than one period but not more than i periods (i is an integer greater than 1) of the displacement detection signal phase A and displacement detection signal phase B) among the residual data obtained by the signal analysis unit 33, residual data having a periodicity exceeding one period of the displacement detection signal phase A and displacement detection signal phase B but not exceeding the first period (including a period independent of the period of the displacement detection signal phase A and displacement detection signal phase B). The first extra-period error calculation unit 43 calculates a displacement error per the first period by converting the extracted residual data into angle data and calculates the variation period of the displacement error, and transmits the calculated displacement error per the first period and the calculated variation period of the displacement error (corresponding to the displacement difference signal) to the displacement correction unit 35.

0066 The second extra-period error calculation unit 44 extracts, from residual data per a preset second period greater than i periods of the displacement detection signal phase A and displacement detection signal phase B (for example, the second period is greater than i periods but not more than n periods (n is an integer greater than i) of the displacement detection signal phase A and displacement detection signal phase B) among the residual data obtained by the signal analysis unit 33, residual data having a periodicity exceeding i periods of the displacement detection signal phase A and displacement detection signal phase B but not exceeding the second period (including a period independent of the period of the displacement detection signal phase A and displacement detection signal phase B). The second extra-period error calculation unit 44 calculates a displacement error per the second period by converting the extracted residual data into angle data and calculates the variation period of the displacement error, and transmits the calculated displacement error per the second period and the calculated variation period of the displacement error (corresponding to the displacement difference signal) to the displacement correction unit 35.

0067 The displacement correction unit 35 sequentially receives the displacement errors and their variation periods (corresponding to the displacement difference signals) transmitted from the intra-period error calculation unit 42, the first extra-period error calculation unit 43, and the second extra-period error calculation unit 44. The displacement correction unit 35 corrects, based on the received displacement errors and variation periods of the displacement errors, the relative displacement between the scale 2 and the detection head 3 sequentially received from the detected displacement calculation unit 32, and outputs the corrected displacement as a calibrated displacement.

0068 Specifically, the displacement error transmitted from the intra-period error calculation unit 42 is used to correct the relative displacement corresponding to the period next to the period in which the error was detected. The displacement error transmitted from the first extra-period error calculation unit 43 is used to correct the relative displacement corresponding to the period next to the period in which the error was detected (the next period in which the error occurs). The displacement error transmitted from the second extra-period error calculation unit 44 is used to correct the displacement corresponding to the period next to the period in which the error was detected (the next period in which the error occurs).

0069 In this aspect, the error occurrence period is divided into three categories, namely, one period of the displacement detection signal phase A and displacement detection signal phase B, the first period greater than one period of the displacement detection signal phase A and displacement detection signal phase B, and the second period greater than the first period, and a periodic (periodically varying) displacement error is calculated in each of the categories by the intra-period error calculation unit 42, the first extra-period error calculation unit 43, and the second extra-period error calculation unit 44. Therefore, even when displacement errors varying with different periods are combined, the displacement errors can be precisely calculated with respect to their respective periods; consequently, the displacement errors are corrected with high accuracy.

0070 Although this aspect is described with respect to an example in which two extra-period error calculation units, namely, the first extra-period error calculation unit 43 and the second extra-period error calculation unit 44, are provided, the present invention is not limited to this configuration. A configuration in which a single extra-period error calculation unit is provided or a configuration in which three or more extra-period error calculation units are provided may be employed. Providing a larger number of extra-period error calculation units allows for finer periodic error correction; however, it increases the processing load. Therefore, it is preferable that the number of extra-period error calculation units to be provided is determined taking into account the balance between the correction fineness and the processing load.

0071

3. Third Embodiment

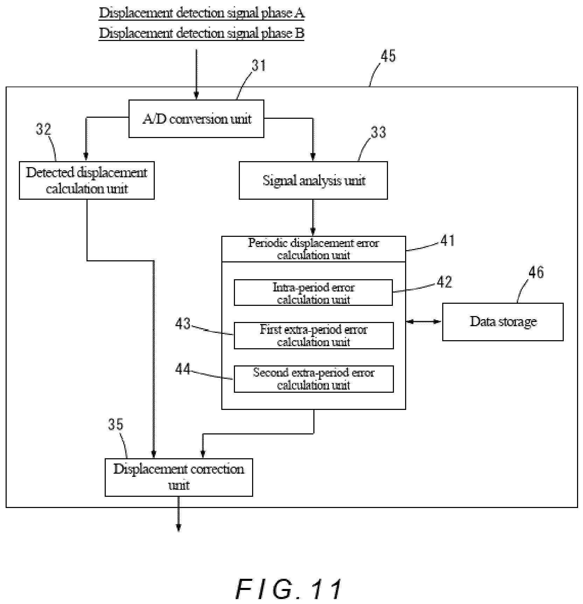

Next, a displacement calculation device according to a third embodiment of the present invention is described with reference to FIG. 11. As shown in FIG. 11, the displacement calculation device 45 according to this embodiment corresponds to the displacement calculation device 40 according to the second embodiment. The displacement calculation device 45 differs from the displacement calculation device 40 in that the displacement calculation device 45 includes a data storage 46. Accordingly, in FIG. 11, the components identical to those of the displacement calculation device 40 are denoted by the same reference numerals used for the displacement calculation device 40.

0072 In the displacement calculation device 45 according to this embodiment, the displacement errors and their variation periods (corresponding to the displacement difference signals) calculated by the intra-period error calculation unit 42, first extra-period error calculation unit 43, and second extra-period error calculation unit 44 of the periodic displacement error calculation unit 41 are stored into the data storage 46. The stored data is updated with newly calculated data.

0073 In this displacement calculation device 45, the periodic displacement error calculation unit 41 can read out and transmit each of the displacement errors differing in error period stored in the data storage 46 to the displacement correction unit 35 at a timing delayed by one corresponding error period. Consequently, the displacement correction unit 35 can precisely correct the displacement sequentially transmitted from the detected displacement calculation unit 32 according to the occurrence period of each error.

0074 As described above, one or more extra-period error calculation units are to be provided. That is to say, the present invention is not limited to the configuration in this embodiment in which two extra-period error calculation units are provided. A configuration in which a single extra-period error calculation unit is provided or a configuration in which three or more extra-period error calculation units are provided may be employed.

0075

4. Fourth Embodiment

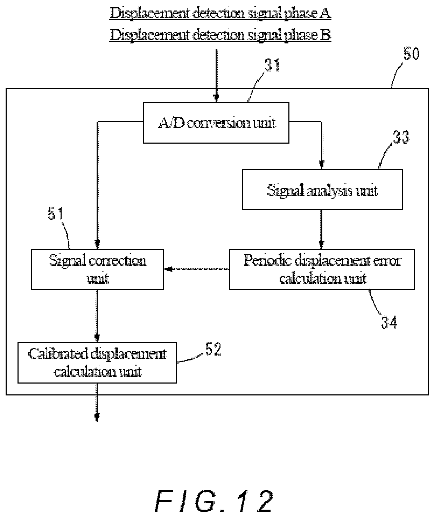

Next, a displacement calculation device according to a fourth embodiment of the present invention is described with reference to FIG. 12. As shown in FIG. 12, the displacement calculation device 50 according to this embodiment corresponds to the displacement calculation device 30 according to the first embodiment. The displacement calculation device 50 differs from the displacement calculation device 30 in that the displacement calculation device 50 includes a signal correction unit 51 and a calibrated displacement calculation unit 52 instead of the detected displacement calculation unit 32 and displacement correction unit 35 of the displacement calculation device 30. Accordingly, in FIG. 12, the components identical to those of the displacement calculation device 30 are denoted by the same reference numerals used for the displacement calculation device 30.

0076 In the displacement calculation device 50, the periodic displacement error and its period calculated by the periodic displacement error calculation unit 34 are transmitted to the signal correction unit 51. The signal correction unit 51 continuously receives the displacement detection signal phase A and the displacement detection signal phase B and receives the periodic displacement error and the period of the displacement error from the periodic displacement error calculation unit 34. The signal correction unit 51 corrects the displacement detection signal phase A and the displacement detection signal phase B based on the received periodic displacement error.

0077 Specifically, with respect to a displacement error varying with a period equal to or less than one period of the displacement detection signal phase A and displacement detection signal phase B, the signal correction unit 51 corrects the displacement detection signal phase A and the displacement detection signal phase B with the received displacement error in synchronization with the displacement detection signal phase A and the displacement detection signal phase B in the period next to the period in which the displacement error was detected. With respect to a displacement error varying with a period greater than one period of the displacement detection signal phase A and displacement detection signal phase B, the signal correction unit 51 corrects the displacement detection signal phase A and the displacement detection signal phase B with the received displacement error in correspondence with the displacement error occurring in the period next to the period in which the displacement error was detected.

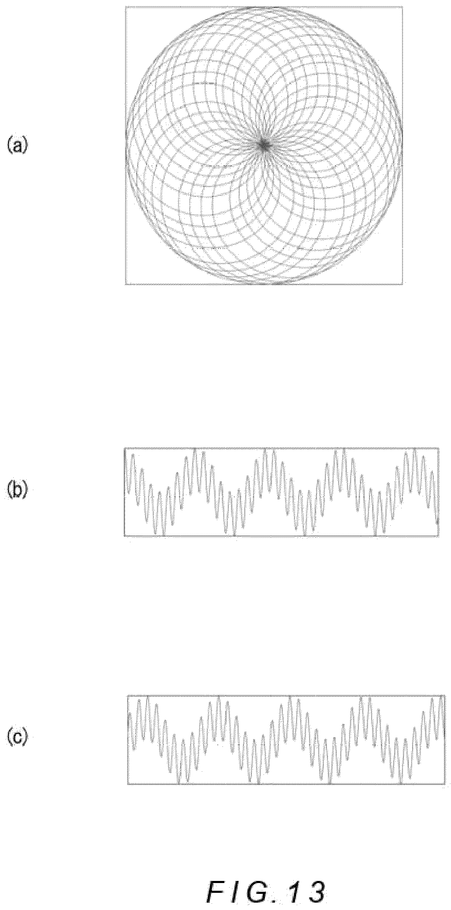

0078 An exemplary correction signal that is transmitted from the periodic displacement error calculation unit 34 to the signal correction unit 51 is shown in FIG. 13. FIG. 13(b) shows a correction signal for the displacement detection signal phase A transmitted from the periodic displacement error calculation unit 34 to the signal correction unit 51. FIG. 13(c) shows a correction signal for the displacement detection signal phase B transmitted from the periodic displacement error calculation unit 34 to the signal correction unit 51. FIG. 13(a) shows the trajectory drawn by representing the correction signal for the displacement detection signal phase A on the horizontal axis and the correction signal for the displacement detection signal phase B on the vertical axis.

0079 The calibrated displacement calculation unit 52 calculates a displacement (calibrated displacement) per a unit time based on the displacement detection signal phase A and displacement detection signal phase B corrected through the same processing as that in the detected displacement calculation unit 32 by the signal correction unit 51. Note that the Lissajous waveform obtained from the displacement detection signal phase A and displacement detection signal phase B corrected by the signal correction unit 51 is close to an ideal perfect circle.

0080 As described above, in the displacement calculation device 50 according to this embodiment, the periodic displacement error calculation unit 34 calculates a displacement error occurring with a period equal to or less than one period of the displacement detection signal phase A and displacement detection signal phase B and a displacement error occurring with a period greater than one period of the displacement detection signal phase A and displacement detection signal phase B (including a period independent of the period of the displacement detection signal phase A and displacement detection signal phase B), and transmits the calculated displacement errors to the signal correction unit 51. The signal correction unit 51 corrects the displacement detection signal phase A and the displacement detection signal phase B based on the received errors to cancel the displacement errors. The calibrated displacement calculation unit 52 calculates a calibrated displacement based on the corrected displacement detection signal phase A and displacement detection signal phase B.

0081 Thus, the displacement calculation device 50 according to this embodiment is also capable of correcting both a displacement error having a period equal to or less than one period of the displacement detection signal phase A and displacement detection signal phase B and a displacement error having a period greater than one period of the displacement detection signal phase A and displacement detection signal phase B (including a period independent of the period of the displacement detection signal phase A and displacement detection signal phase B). Consequently, the detected displacement calculated based on the displacement detection signal phase A and the displacement detection signal phase B is precisely (accurately) corrected and the correction residual is converged.

0082

5. Fifth Embodiment

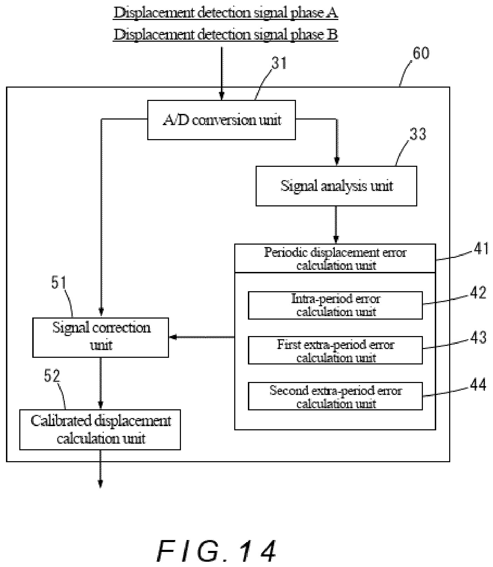

Next, a displacement calculation device according to a fifth embodiment of the present invention is described with reference to FIG. 14. As shown in FIG. 14, the displacement calculation device 60 according to this embodiment corresponds to the displacement calculation device 40 according to the second embodiment. The displacement calculation device 60 differs from the displacement calculation device 40 in that the displacement calculation device 60 includes the signal correction unit 51 and calibrated displacement calculation unit 52 of the displacement calculation device 50 according to the fourth embodiment instead of the detected displacement calculation unit 32 and displacement correction unit 35 of the displacement calculation device 40. Accordingly, in FIG. 14, the components identical to those of the displacement calculation device 40 and displacement calculation device 50 are denoted by the same reference numerals used for the displacement calculation device 40 and the displacement calculation device 50.

0083 In the displacement calculation device 60 according to this embodiment, as described above, the intra-period error calculation unit 42 of the periodic displacement error calculation unit 41 calculates a displacement error per the period of the displacement detection signal phase A and displacement detection signal phase B and the period of the displacement error based on the residuals in terms of the amplitude error, offset, and phase difference per the period of the displacement detection signal phase A and displacement detection signal phase B analyzed by the signal analysis unit 33. Further, the first extra-period error calculation unit 43 calculates, based on residual data having a periodicity within the preset first period greater than one period of the displacement detection signal phase A and displacement detection signal phase B (including a period independent of the period of the displacement detection signal phase A and displacement detection signal phase B), a displacement error per the first period and the period of the displacement error. Further, the second extra-period error calculation unit 44 calculates, based on residual data having a periodicity within the preset second period greater than the first period (including a period independent of the period of the displacement detection signal phase A and displacement detection signal phase B), a displacement error per the second period and the period of the displacement error. These periodic displacement errors and their periods (corresponding to the displacement difference signals) calculated by the intra-period error calculation unit 42, the first extra-period error calculation unit 43, and the second extra-period error calculation unit 44 are transmitted to the signal correction unit 51.

0084 The signal correction unit 51 corrects the displacement detection signal phase A and the displacement detection signal phase B based on the periodic displacement errors transmitted from the intra-period error calculation unit 42, the first extra-period error calculation unit 43, and the second extra-period error calculation unit 44. Specifically, the displacement error transmitted from the intra-period error calculation unit 42 is used to correct the displacement detection signal phase A and displacement detection signal phase B corresponding to the period next to the period in which the error was detected. The displacement error transmitted from the first extra-period error calculation unit 43 is used to correct the displacement detection signal phase A and displacement detection signal phase B corresponding to the period next to the period in which the error was detected (the next period in which the error occurs). The displacement error transmitted from the second extra-period error calculation unit 44 is used to correct the displacement detection signal phase A and displacement detection signal phase B corresponding to the period next to the period in which the error was detected (the next period in which the error occurs).

0085 The calibrated displacement calculation unit 52 calculates a displacement (calibrated displacement) per a unit time based on the displacement detection signal phase A and displacement detection signal phase B corrected through the same processing as that in the detected displacement calculation unit 32 by the signal correction unit 51.

0086 In the displacement calculation device 60 according to this embodiment, similarly in the displacement calculation device 40 according to the second embodiment, the error occurrence period is divided into three categories, namely, one period of the displacement detection signal phase A and displacement detection signal phase B, the first period greater than one period of the displacement detection signal phase A and displacement detection signal phase B, and the second period greater than the first period, and a displacement error having a periodicity (including a period independent of the period of the displacement detection signal phase A and displacement detection signal phase B) is calculated in each of the categories in the intra-period error calculation unit 42, the first extra-period error calculation unit 43, and the second extra-period error calculation unit 44. Therefore, even when displacement errors having various periodicities are combined, the displacement errors can be precisely calculated with respect to their respective periods; consequently, the displacement errors are corrected with high accuracy.

0087 Although this aspect is described with respect to an example in which two extra-period error calculation units, namely, the first extra-period error calculation unit 43 and the second extra-period error calculation unit 44, are provided, the present invention is not limited to this configuration. A configuration in which a single extra-period error calculation unit is provided or a configuration in which three or more extra-period error calculation units are provided may be employed. Providing a larger number of extra-period error calculation units allows for finer periodic error correction; however, it increases the processing load. Therefore, it is preferable that the number of extra-period error calculation units to be provided is determined taking into account the balance between the correction fineness and the processing load.

0088

6. Sixth Embodiment

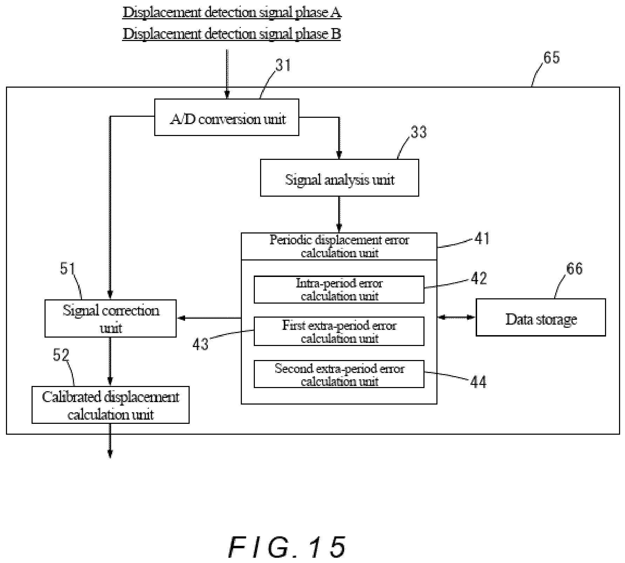

Next, a displacement calculation device according to a sixth embodiment of the present invention is described with reference to FIG. 15. As shown in FIG. 15, the displacement calculation device 65 according to this embodiment corresponds to the displacement calculation device 60 according to the fifth embodiment. Similarly to the displacement calculation device 45 according to the third embodiment, the displacement calculation device 65 differs from the displacement calculation device 60 in that the displacement calculation device 65 includes a data storage 66. Accordingly, in FIG. 15, the components identical to those of the displacement calculation device 60 are denoted by the same reference numerals used for the displacement calculation device 60.

0089 In the displacement calculation device 65 according to this embodiment, the displacement errors and their variation periods (corresponding to the displacement difference signals) calculated by the intra-period error calculation unit 42, first extra-period error calculation unit 43, and second extra-period error calculation unit 44 of the periodic displacement error calculation unit 41 are stored into the data storage 66. The stored data is updated with newly calculated data.

0090 In this displacement calculation device 65, the periodic displacement error calculation unit 41 can read out and transmit each of the displacement errors differing in error period stored in the data storage 66 to the signal correction unit 51 at a timing delayed by one corresponding error period. Consequently, the signal correction unit 51 can precisely correct the input displacement detection signal phase A and displacement correction signal phase B according to the occurrence period of each error. Depending on the length of the signal period of the displacement detection signal phase A and displacement detection signal phase B and the degree of regularity of the variation of the Lissajous waveform, the data storage 66 may have a capacity smaller than that of the data storage 46 of the displacement calculation device 45 according to the third embodiment.

0091 The displacement calculation devices 30, 40, 45, 50, 60, and 65 in the above-described embodiments can be composed of a computer including a CPU, a RAM, and a ROM or can be implemented by an electronic device including an appropriate electronic circuit.

0092 Above have been described embodiments of the present invention. However, it should be noted that the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims.

Reference Signs List

0093

| | |
|---|---|
| 1 | Displacement detection device |
| 2 | Scale |
| 3 | Detection head |
| 5 | Polarizing beam splitter |
| 6, 7 | Mirror |
| 8, 9 | Mirror |
| 10 | Light receiving unit |
| 11 | Phase plate |
| 12 | Half mirror |
| 13 | First light receiving unit |
| 14 | Polarizing beam splitter |
| 15 | First light receiving element |
| 16 | Second light receiving element |
| 17 | Second light receiving unit |
| 18 | Polarizing beam splitter |
| 19 | Third light receiving element |
| 20 | Fourth light receiving element |
| 21 | Differential amplifier |
| 22 | First differential amplifier |
| 23 | Second differential amplifier |
| 30 | Displacement calculation device |
| 31 | A/D conversion unit |
| 32 | Detected displacement calculation unit |
| 33 | Signal analysis unit |
| 34 | Periodic displacement error calculation unit |
| 35 | Displacement correction unit |

**Claims**

1. A displacement calculation device (30) calculating a displacement based on two or more periodic signals differing in phase, the displacement calculation device (30) comprising:

   a detected displacement calculation unit (32) configured to calculate a detected displacement based on the periodic signals;
   a signal analysis unit (33) configured to calculate an amplitude error, a vibration center error, and a phase error between the periodic signals and a reference signal corresponding to the periodic signals;
   a periodic displacement error calculation unit (34) configured to calculate, based on the errors calculated by the signal analysis unit (33), a displacement error having a period equal to or less than one period of the periodic signals, a displacement error having a period greater than one period of the periodic signals and independent of at least the period of the periodic signals, and the periods of the displacement errors; and

a displacement correction unit (35) configured to correct the detected displacement calculated by the detected displacement calculation unit (32), based on the displacement error having a period equal to or less than one period of the periodic signals, displacement error having a period greater than one period of the periodic signals and independent of at least the period of the periodic signals, and periods of the displacement errors calculated by the periodic displacement error calculation unit (34), and output a corrected calibrated displacement.

2. A displacement calculation device (30) calculating a displacement, the displacement calculation device (30) having a scale (2) and a displacement detection sensor (3) detecting a relative displacement with respect to the scale (2) and the displacement calculation device (30) comprising:

a detected displacement calculation unit (32) configured to calculate a displacement based on two or more displacement detection signals differing in phase output from the displacement detection sensor (3);

a signal analysis unit (33) configured to calculate an amplitude difference, a center position difference, and a phase difference between the displacement detection signals and a reference signal corresponding to the displacement detection signals;

a periodic displacement error calculation unit (34) configured to calculate, based on the differences calculated by the signal analysis unit (33), (i) a first displacement difference signal varying with a period equal to or less than a period of the displacement detection signals and (ii) a second displacement difference signal varying with a period greater than the period of the displacement detection signals and independent of at least the period of the displacement detection signals; and

a displacement correction unit (35) configured to correct the displacement calculated by the detected displacement calculation unit (32), based on the first displacement difference signal and second displacement difference signal calculated by the periodic displacement error calculation unit (34), and output a corrected calibrated displacement.

3. A displacement calculation device (30) for calculating a displacement based on signals corresponding to two or more phases including at least a first phase and a second phase different from the first phase, the displacement calculation device (30) comprising:

a displacement calculation unit (32) configured to calculate a first displacement based on the signals respectively corresponding to the first phase and the second phase;

a signal analysis unit (33) configured to detect a period related to a trajectory of a center of a Lissajous waveform obtained from the signals respectively corresponding to the first phase and the second phase and analyze the signals for the detected period;

a displacement error calculation unit (34) configured to calculate, based on analysis by the signal analysis unit (33), a displacement error corresponding to a periodicity related to the trajectory of the center of the Lissajous waveform in the signals for the detected period; and

a displacement correction unit (35) configured to correct the first displacement calculated by the displacement calculation unit (32), based on the displacement error calculated by the displacement error calculation unit (34), and output a corrected displacement.

30

1

Displacement
calculation device

21

10

4

9

5

8

6

7

2

F I G. 1

*FIG. 2*

15 — First light receiving element

16 — Second light receiving element

19 — Third light receiving element

20 — Fourth light receiving element

22 — First differential amplifier 21

23 — Second differential amplifier

→ Displacement detection signal phase A

→ Displacement detection signal phase B

*F I G . 3*

Displacement detection signal phase A
Displacement detection signal phase B

31

30

A/D conversion unit

32

Detected displacement
calculation unit

33

Signal analysis unit

Periodic displacement error
calculation unit

34

35

Displacement correction
unit

F I G. 4

F I G. 5

F I G. 6

FIG. 7

FIG. 8

(a)

(b)

(c)

(d)

*F I G. 9*

Displacement detection signal phase A
Displacement detection signal phase B

31

40

A/D conversion unit

32

Detected displacement
calculation unit

33

Signal analysis unit

Periodic displacement error
calculation unit — 41

Intra-period error
calculation unit — 42

First extra-period error
calculation unit — 43

Second extra-period error
calculation unit — 44

35

Displacement correction
unit

F I G . 1 0

Displacement detection signal phase A
Displacement detection signal phase B

31

45

A/D conversion unit

32

Detected displacement
calculation unit

33

Signal analysis unit

Periodic displacement error
calculation unit — 41

Intra-period error
calculation unit — 42

46

43 — First extra-period error
calculation unit

Data storage

44 — Second extra-period error
calculation unit

35

Displacement correction
unit

F I G . 11

Displacement detection signal phase A
Displacement detection signal phase B

FIG.12

(a)

(b)

(c)

FIG. 13

Displacement detection signal phase A
Displacement detection signal phase B

31 ⟍          60 ⟍

```
         ┌──────────────────────┐
         │  A/D conversion unit  │
         └──────────────────────┘
                              │
                              ▼              33
                   ┌────────────────────┐
                   │ Signal analysis unit │
                   └────────────────────┘
                              │
                              ▼
              ┌─────────────────────────────┐
              │ Periodic displacement error  │───── 41
              │     calculation unit         │
              │  ┌────────────────────────┐  │
              │  │   Intra-period error    │──┼── 42
              │  │    calculation unit     │  │
  51          │  └────────────────────────┘  │
   │          │  ┌────────────────────────┐  │
   ▼          │  │  First extra-period error│──┼── 43
┌──────────────┐│  │    calculation unit     │  │
│   Signal     │◄──│  └────────────────────────┘  │
│  correction  ││  ┌────────────────────────┐  │
│    unit      ││  │ Second extra-period error│──┼── 44
└──────────────┘│  │    calculation unit     │  │
   52   │       │  └────────────────────────┘  │
   │    ▼       └─────────────────────────────┘
┌──────────────────┐
│    Calibrated    │
│   displacement   │
│ calculation unit │
└──────────────────┘
        │
        ▼
```

FIG.14

29

Displacement detection signal phase A
Displacement detection signal phase B

A/D conversion unit — 31

Signal analysis unit — 33

Periodic displacement error calculation unit — 41

Intra-period error calculation unit — 42

First extra-period error calculation unit — 43

Second extra-period error calculation unit — 44

Signal correction unit — 51

Calibrated displacement calculation unit — 52

Data storage — 66

65

FIG. 15

30

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 100 34 733 A1 (SIEMENS AG) 15 February 2001 (2001-02-15) * abstract; figures * * columns 3,4 * ----- | 1-3 | INV. G01D5/244 |
| X | US 2022/187105 A1 (YOSHIHIRO) 16 June 2022 (2022-06-16) * abstract; figures * * paragraphs [0058] - [0094] * ----- | 1-3 | |
| X | US 2006/076480 A1 (KIRIYAMA ET AL) 13 April 2006 (2006-04-13) * abstract; figures * * paragraphs [0030] - [0036] * ----- | 1-3 | |
| X | WO 2016/132773 A1 (SONY CORP) 25 August 2016 (2016-08-25) * abstract; figures * * the whole document * ----- | 1-3 | |
| | | | **TECHNICAL FIELDS SEARCHED (IPC)** G01D |

The present search report has been drawn up for all claims

| Place of search | Date of completion of the search | Examiner |
|---|---|---|
| Munich | 20 September 2024 | Barthélemy, Matthieu |

EP 4 471 382 A1

## ANNEX TO THE EUROPEAN SEARCH REPORT
## ON EUROPEAN PATENT APPLICATION NO.

EP 24 17 8720

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | | Publication date | Patent family member(s) | | Publication date |
|---|---|---|---|---|---|
| DE 10034733 | A1 | 15-02-2001 | NONE | | |
| US 2022187105 | A1 | 16-06-2022 | NONE | | |
| US 2006076480 | A1 | 13-04-2006 | CN | 1769844 A | 10-05-2006 |
| | | | EP | 1647810 A1 | 19-04-2006 |
| | | | EP | 2302329 A2 | 30-03-2011 |
| | | | JP | 4768248 B2 | 07-09-2011 |
| | | | JP | 2006112862 A | 27-04-2006 |
| | | | US | 2006076480 A1 | 13-04-2006 |
| WO 2016132773 | A1 | 25-08-2016 | JP | 2016151499 A | 22-08-2016 |
| | | | WO | 2016132773 A1 | 25-08-2016 |

EPO FORM P0459

For more details about this annex : see Official Journal of the European Patent Office, No. 12/82

**EP 4 471 382 A1**

**REFERENCES CITED IN THE DESCRIPTION**

**Patent documents cited in the description**

- JP H8122097 A
- JP 2022093252 A